# EUROPÄISCHE PATENTSCHRIFT

(11) **EP 0 775 865 B1**
(45) Veröffentlichungstag und Bekanntmachung des Hinweises auf die Patenterteilung: **25.07.2001**
(21) Anmeldenummer: 96118171.6
(22) Anmeldetag: 13.11.1996
(51) Int. Cl.: F16L 25/00, F16L 33/26, F16L 33/28, F16L 23/024

(54) **Anordnung zum Verbinden des Endes eines schraubenlinienförmig gewellten Metallrohres mit einem Anschlussstück**
Device for connecting the end of a helically corrugated pipe to a fitting
Dispositif de connexion de l'extrémité d'un tuyau ondulé en hélice à un raccord

(30) Priorität: 25.11.1995 DE 29518712 U
(43) Veröffentlichungstag der Anmeldung: 28.05.1997
(73) Patentinhaber: BRUGG Rohrsysteme GmbH, D-31515 Wunstorf (DE)
(72) Erfinder: Homann, Jörn, Dipl.-Ing., 30655 Hannover (DE); Krüger, Hartmut, 30457 Hannover (DE)

(56) Entgegenhaltungen:
- DE-A- 3 341 297
- DE-A- 4 027 818

## Beschreibung

Die Erfindung betrifft eine Anordnung nach dem Oberbegriff des Anspruchs 1.

Zur Herstellung einer Verbindung von Metallrohren miteinander bzw. einer Verbindung zwischen einem Metallrohr und einem Anschlußstück gibt es mannigfaltige Lösungen. So ist es üblich, die genannten Bauteile miteinander zu verlöten oder zu verschweißen bzw. zu verschrauben.

Problematisch ist die Herstellung einer Verbindung von dünnwandigen Metallrohren miteinander bzw. mit einem Flansch, da ein Verschrauben oder Verschweißen wegen der geringen Wanddicke nur schwer durchführbar ist, und ein Verlöten nur bei wenigen Metallen sinnvoll ist.

Noch komplizierter gestaltet sich der Anschluß eines schraubenlinienförmig gewellten dünnwandigen Metallrohres an einen Flansch.

Aus der CH-PS 589 249 ist es bekannt, das Ende eines gewellten Metallrohres gegen die Innenfläche eines Flansches zu walzen, wobei die Wellung eingeebnet wird. Durch den beim Walzen anstehenden hohen Anpreßdruck entsteht zwischen dem ehemals gewellten Metallrohr und dem Metallflansch eine dichte Preßverbindung. Diese Art der Verbindung erfordert einen hohen apparativen Aufwand an der Montagestelle und setzt dickwandige Formteile voraus.

Eine andere Verbindungsart für gewellte Metallrohre ist in der DE-PS 33 02 450 beschrieben. Auf das Ende eines gewellten Rohres wird eine Stützbuchse geschraubt, und ein Rohrstutzen in das Ende des gewellten Rohres geschraubt. Die Abdichtung ergibt sich dadurch, daß die lichte Weite der Stützbuchse zum Ende hin zunimmt und/oder der Außendurchmesser des Rohrstutzens zum Ende hin abnimmt. Beim Einschrauben des Rohrstutzens in das durch ein Formwerkzeug der Innenkontur der Außenbuchse angepaßte Wellrohrende wird das Wellrohr zwischen dem Rohrstutzen und der Stützbuchse abgedichtet.

Aus der DE-OS 40 27 818 ist eine Anschlußarmatur für schraubenlinienförmig gewellte Metallrohre bekannt, die eine auf das Wellrohrende aufgeschraubte Außenbuchse mit einem das Wellrohrende überragenden Glattrohransatz aufweist. Der Glattrohransatz besitzt ein Innengewinde, in welches ein Anschlußrohrstück eingeschraubt wird. Das Anschlußrohrstück dringt mit einem abgestuften Ende in das Wellrohr ein. Beim Einschrauben des Anschlußrohrstücks wird die Wellung des Wellrohres am Ende gestaucht. Die Abdichtung erfolgt durch eine in die letzten Wellengänge eingelegte Dichtungsschnur aus Graphit, die beim Stauchen der Wellung verformt und gegen die Innenwandung der Außenbuchse und das in das Wellrohrende eingedrungene abgestufte Ende des Rohrstutzens gepreßt wird.

Aus der DE-A-3 341 297 ist eine Dichtpackung zum Abdichten von Wellrohren bekannt, die aus zwei auf dem Wellrohr angeordneten gegeneinander bewegbaren und ineinanderfassenden Buchsen besteht, zwischen welchen ein das Wellrohr umfassender Ringraum zur Aufnahme einer Dichtmasse gebildet wird. Es ist eine sich von innen an den Dichtbereich anlegende Wellrohrhülse vorgesehen. Als Dichtmasse wird Graphit vorgeschlagen. Der vorliegenden Erfindung liegt die Aufgabe zugrunde, eine Anschluß- bzw. Durchgangsverbindung für schraubenlinienförmig gewellte Metallrohre bereitzustellen, die aus einfachen Bauteilen besteht und ohne Spezialwerkzeuge montierbar ist. Insbesondere soll auf den Einsatz von Schweiß- oder Lötwerkzeugen verzichtet werden.

Diese Aufgabe wird durch die im Kennzeichen des Anspruchs 1 erfaßten Merkmale gelöst.

Der wesentliche Vorteil der Erfindung ist darin zu sehen, daß die Dichtung im Kraftnebenschluß angeordnet ist und nach der Montage mechanisch von äußeren Beanspruchungen entlastet ist. Dies führt zu einer dauerhaften Abdichtung auch bei kräftigen Temperaturschwankungen.

Ein besonderer Vorteil besteht noch darin, daß die erfindungsgemäße Anordnung zur Verbindung der Innenrohre eines aus zwei koaxialen Wellrohren bestehenden Leitungsrohres verwendbar ist. Ein solches Leitungsrohr weist zwischen den Wellrohren eine Isolierschicht aus aufgeschäumtem Kunststoff auf und findet bevorzugt Anwendung als Fernwärmeleitungsrohr.

Weitere vorteilhafte Ausgestaltungen sind in den Unteransprüchen erfaßt.

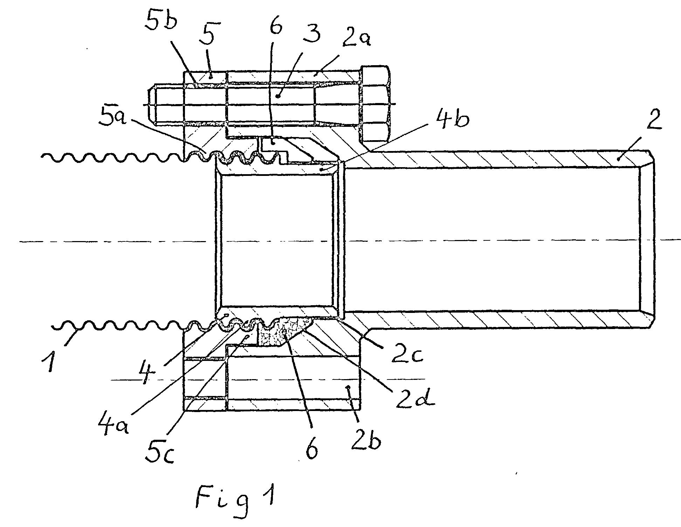

Die Erfindung ist anhand der in den Figuren 1 bis 3 schematisch dargestellten Ausführungsbeispiele näher erläutert.

Die Figur 1 zeigt eine Verbindung zwischen einem schraubenlinienförmig gewellten Metallrohr 1 und einem Anschlußstück 2, welches vorzugsweise aus Metall besteht. An das Ende des Anschlußstücks 2 können in für den Rohrbauer geläufiger Weise Glattrohrenden, Rohrflansche etc. angelötet, angeschweißt oder angeschraubt werden. Das Anschlußstück 2 besitzt ein Flanschteil 2a mit Bohrungen 2b, durch welche Schraubbolzen 3 hindurchgeführt werden können.

In das Ende des gewellten Metallrohres 1 ist ein Stützring 4 mit einem Grobgewinde 4a eingeschraubt. Der Stützring 4 weist einen glattwandigen Bereich 4b auf, der aus dem Ende des Metallrohres 1 herausragt. Auf das Ende des Metallrohres 1 ist ein Druckring 5 mit einem Grobgewinde 5a soweit aufgeschraubt, daß das Ende des Metallrohres 1 mit mindestens einer Wellensteigung aus dem Druckring 5 herausragt. Der Druckring 5 besitzt ebenfalls Bohrungen 5b, die vorzugsweise als Gewindebohrungen ausgebildet sind, in welche die Schraubbolzen 3 eingeschraubt sind.

Der Druckring 5 weist einen Ansatz 5c auf, der in den Flansch 2a des Anschlußstücks 2 eindringt. Der Ansatz 5c kann an der Stirnseite auch konisch ausgebildet sein. Im Übergangsbereich des Anschlußstücks 2 vom rohrförmigen Bereich zum Flansch 2a ist eine Ausdrehung 2c vorgesehen, die das Ende des glattwandigen Bereichs 4b aufnimmt. An die Ausdrehung 2c schließt sich ein konischer Übergangsbereich 2d an.

In der durch den glattwandigen Bereich 4b, das Ende des Metallrohres 1, den Ansatz 5c, den Flansch 2a und den konischen Übergang 2d gebildeten Dichtkammer befindet sich ein Dichtring 6 aus einem kompressiblen Werkstoff. Mit besonderem Vorteil wird Graphit verwendet, welches beim Anziehen der Schraubbolzen 3 und der damit verbundenen Volumensverringerung der Dichtkammer komprimiert wird und in die zwischen den einzelnen Bauteilen bestehenden Spalte fließt.

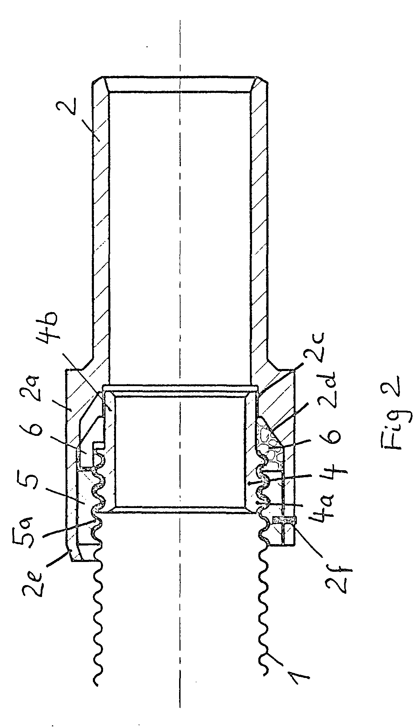

In der Figur 2 ist an Stelle der Schraubbolzen 3 das axiale Verpressen und das Komprimieren des Dichtringes 6 mittels eines nicht dargestellten speziellen Werkzeugs durchgeführt. Die Fixierung des komprimierten Zustandes erfolgt dadurch, daß das Anschlußstück 2 an seinem dem Wellrohr 1 zugekehrten Ende 2e den Druckring 5 überragt und das überragende Ende 2e heruntergeformt ist. Eine andere Lösung sieht einen oder mehrere Stifte 2f vor, die den Dichtring 5 und das Anschlußstück 2 fixieren.

Der Dichtring 6 besteht vorteilhafterweise aus zwei Teilen mit unterschiedlicher Dichte, u. z. sollte die Dichte im schmalen Schaftteil, d. h. dem Teil, der vor dem Verpressen auf dem Wellrohrende aufliegt, niedriger sein als die Dichte im Schaftteil, der auf dem Ansatz 4b sitzt. Hieraus entstehen zwei wesentliche Vorteile:
1.) wegen der geringeren Dichte von ca 1,25 bis 1,4 gr/cm³ läßt sich der schmale Schaftteil einfacher herstellen,
2.) Dieser Teil läßt sich beim Verpressen besonders leicht verformen und führt somit zu einer sicheren Abdichtung.

## Patentansprüche

1. Verbindung zwischen dem Ende eines schraubenlinienförmig gewellten Metallrohres mit einem Anschlußstück, bei dem
a) in das Ende des schraubenlinienförmig gewellten Metallrohres (1) ein Stützring (4) mit einem der Wellung des Metallrohres (1) angepaßten Grobgewinde (4a) eingeschraubt ist, welches sich über einen Bereich seiner äußeren Oberfläche erstreckt,
b) der Stützring (4) aus dem Ende des gewellten Metallrohres (1) mit einem glattwandigen Bereich (4b) herausragt
c) auf das Ende des schraubenlinienförmigen gewellten Metallrohres (1) ein Druckring (5) mit einem Innengewinde (5a) soweit aufgeschraubt ist, daß das Ende des schraubenlinienförmig gewellten Metallrohres (1) aus dem Druckring (5) herausragt,
d) das Anschlußstück (2) an seinem dem Ende des gewellten Metallrohrs (1) zugekehrten Ende eine Durchmessererweiterung aufweist, wodurch das Anschlußstück (2) gemeinsam mit dem Druckring (5) und dem glattwandigen Bereich (4b) des Stützrings (4) eine Dichtkammer bildet und
e) in der Dichtkammer ein Dichtring (6) aus Graphit mit einer Dichte von 1,25 bis 1,6 g/cm³, die im komprimierten Zustand um 10 - 20 % höher liegt angeordnet ist, der durch axiales Gegenziehen von Druckring (5) und Anschlußstück (2) komprimiert ist.

2. Anordnung nach Anspruch 1, dadurch gekennzeichnet, daß der Dichtring (6) im Innendurchmesser gestuft ausgebildet ist, wobei die erste Stufe auf den glattwandigen Bereich (4b) des Stützringes (4) und die zweite Stufe auf dem Ende des gewellten Metallrohres (1) aufsitzt.

3. Anordnung nach einem der Ansprüche 1 bis 2, dadurch gekennzeichnet, daß zwischen dem Innendurchmesser des Anschlußstücks (2) und der Durchmessererweiterung des Anschlußstücks (2) ein konischer Übergang (2d) vorgesehen ist.

4. Anordnung nach einem der Ansprüche 1 bis 3, dadurch gekennzeichnet, daß der Druckring (5) einen Flansch mit mehreren Öffnungen (5b) aufweist, daß das Anschlußstück (2) ebenfalls einen Flansch (2a) mit mehreren Öffnungen (2b) aufweist, und daß das axiale Gegenziehen durch in den Öffnungen (2b,5b) befindliche Schraubbolzen (3) erfolgt.

5. Anordnung nach Anspruch 4, dadurch gekennzeichnet, daß die Öffnungen (5b) im Flansch des Druckrings (5) jeweils ein Innengewinde aufweisen.

6. Anordnung nach einem der Ansprüche 1 bis 5, dadurch gekennzeichnet, daß der Dichtring (6) aus zwei Teilen mit jeweils unterschiedlicher Dichte besteht.

## Claims

1. A connection between the end of a helically corrugated metal pipe with a connector whereby:
a) Into the end of the helically corrugated metal pipe (1), a support ring (4) is screwed with a large thread (4a) that fits the corrugation of the metal pipe (1), and the thread extends over an area of the outer surface,
b) The support ring (4) extends out of the end of the corrugated metal pipe (1) with a smooth-walled area (4b),
c) A pressure ring (5) with an inner thread (5a) is screwed on the end of the helically corrugated metal pipe (1) so that the end of the helically corrugated metal pipe (1) extends out of the pressure ring (5),
d) The diameter expands at the end of the connector (2) facing the end of the corrugated metal pipe (1) so that the connector (2) and the sealing ring (5) and smooth-walled area (4b) of the support ring (4) form a sealing chamber, and
e) There is a sealing ring (6) of graphite in the sealing chamber that has a density of 1.25 to 1.6 g/cm³ that is 10 - 20% greater when compressed, and the ring is compressed when the pressure ring (5) and the connector (2) pull against each other in an axial direction.

2. An arrangement according to claim 1, characterized in that the sealing ring (6) has a stepped inner diameter, whereby the first step sits on the smooth-walled area (4b) of the support ring (4), and the second step sits on the end of the corrugated metal pipe (1).

3. An arrangement according to one of claims 1 - 2, characterized in that there is a conical transition (2d) between the inner diameter of the connector (2) and the expanded diameter of the connector (2).

4. An arrangement according to one of claims 1 - 3, characterized in that the pressure ring (5) has a flange with several openings (5b), that the connector (2) also has a flange (2a) with several openings (2b), and that the axial tension in opposite directions is generated by threaded bolts (3) in the openings (2b, 5b),

5. An arrangement according to claim 4, characterized in that the openings (5b) in the flange of the pressure ring (5) have an inner thread.

6. An arrangement according to one of claims 1 - 5, characterized in that the sealing ring (6) consists of two parts with different densities.

## Revendications

1. Une liaison entre l'extrémité d'un tuyau métallique spiralé et ondulé, à l'aide d'une pièce de raccordement, caractérisée ainsi:
a) dans l'extrémité du tuyau métallique spiralé et ondulé (1) on vient visser un anneau d'appui (4) dans un filet spiralé du tuyau métallique (1) par l'intermédiaire d'un filetage grossier (4a) situé sur le diamètre extérieur de l'anneau,
b) l'anneau d'appui (4) dépasse l'extrémité ondulée du tuyau métallique (1) avec une partie lisse (4b)
c) sur l'extrémité du tuyau métallique spiralé et ondulé (1) on vient visser un anneau de pressage (5) comportant un taraudage interne (5a) jusqu'à ce que l'extrémité du tuyau métallique spiralé et ondulé (1) dépasse le bord de l'anneau de pressage (5),
d) la pièce de raccordement (2) comporte un épaulement dans sa partie opposée à l'extrémité ondulée du tuyau métallique (1), permettant ainsi la formation d'une cavité d'étanchéité par la pièce de raccordement (2) en association avec l'anneau de pressage (5) et la partie à paroi lisse (4b) de l'anneau d'appui (4), et
e) dans cette cavité d'étanchéité on introduit un joint d'étanchéité (6) en graphite dont la masse volumique est située entre 1,25 et 1,6 g/cm³, et est supérieure de 10 à 20% à l'état comprimé qui est obtenu par le pressage axial de l'anneau de pressage (5) vers la pièce de raccordement (2).

2. Un dispositif conforme à la revendication 1, et caractérisé par le fait que le joint d'étanchéité (6) possède un diamètre interne étagé, le premier étage étant disposé sur la partie à paroi lisse (4b) de l'anneau d'appui (4) et le deuxième étage sur l'extrémité de la partie ondulée du tuyau métallique ondulé (1).

3. Un dispositif conforme à une des revendications 1 ou 2, et caractérisé par le fait qu'entre le diamètre intérieur de la pièce de raccordement (2) et le diamètre de l'alésage supplémentaire de la pièce de raccordement (2), une partie de transition conique (2d) est prévue.

4. Un dispositif conforme à une des revendications 1 à 3, et caractérisé par le fait que l'anneau de pressage (5) comporte une bride à plusieurs perçages (5b), et que la pièce de raccordement (2) comporte également une bride (2a) munie de plusieurs perçages (2b), et que le pressage axial réciproque des pièces est obtenu par le serrage des vis (3) passées dans les orifices (2b, 5b).

5. Un dispositif conforme à la revendication 4, et caractérisé par le fait que les orifices (5b) de la bride de l'anneau de serrage (5) possèdent chacun un taraudage interne.

6. Un dispositif conforme à une des revendications 1 à 5, et caractérisé par le fait que le joint d'étanchéité (6) est constitué de deux pièces possédant des masses volumiques différentes.
